# FASCICULE DE BREVET EUROPEEN

(11) **EP 1 609 755 B1**
(45) Date de publication et mention de la délivrance du brevet: **25.06.2008**
(21) Numéro de dépôt: 05291313.4
(22) Date de dépôt: 20.06.2005
(51) Int. Cl.: B66F 3/08

(54) **Pont élévateur pour véhicule automobile equipé d'un vérin á vis**
Scherenheber für Fahrzeuge mit einem Spindelantrieb.
Motor vehicle lift using a screw jack.

(30) Priorité: 23.06.2004 FR 0406852
(43) Date de publication de la demande: 28.12.2005
(73) Titulaire: F.F.B, 58440 Myennes (FR)
(72) Inventeur: Rapidel, Jean-Loup, 27730 Bueil (FR); Chevrier, Patrick, 58200 Cosne sur Loire (FR)
(74) Mandataire: Domenego, Bertrand

(56) Documents cités:
- EP-A2- 0 404 318
- DE-C- 873 469
- DE-C- 951 788
- GB-A- 429 202
- GB-A- 2 088 017
- US-B1- 6 485 001

## Description

La présente invention concerne un pont élévateur pour véhicule automobile selon le préambule de la revendication 1. Un tel pont élévateur est connu de GB 429 202.

Des ponts élévateurs pour véhicule automobile comprennent généralement un bâti fixe, un équipage mobile verticalement sur le bâti, et des moyens d'entraînement pour déplacer l'équipage mobile vers le haut ou vers le bas. L'équipage mobile supporte en fonctionnement un véhicule à inspecter.

Les moyens d'entraînement sont généralement prévus sous la forme de vérins à vis du type précité.

Du fait de l'usure du vérin à vis au cours du temps, l'écrou doit être changé souvent lors d'opérations de maintenance qui immobilisent le pont élévateur. Or, les ponts élévateurs sont des outils indispensables et coûteux. Pour les rentabiliser au mieux, il est préférable d'espacer autant que faire se peut des opérations de maintenance.

Un but de la présente invention est de proposer un pont élévateur comprenant un vérin à vis pouvant être utilisé pendant une durée prolongée.

A cet effet, la présente invention propose un pont élévateur selon la revendication 1.

Selon des modes de réalisation particuliers, le pont élévateur comprend une ou plusieurs des caractéristiques suivantes, prise(s) isolément ou selon toute les combinaisons techniquement possibles :
- la base du premier filet est plus large que la base du deuxième filet.
- le rapport de l'aire de la section du premier filet sur l'aire de la section du deuxième filet est sensiblement supérieur à 1,1, notamment supérieur 1,2, et en particulier supérieur à 1,3.
- le rapport de l'aire de la section du premier filet sur l'aire de la section du premier filet est sensiblement inférieur à 3, notamment inférieur à 2,5, et en particulier inférieur à 2.
- le filet présentant une section d'aire inférieure est le filet de la vis.
- le premier filet est moins dur que le deuxième filet.
- le deuxième filet est en acier, notamment en acier écroui.
- le premier filet est en bronze.
- le premier filet est en matière plastique, notamment en polyamide.

L'invention concerne également un pont élévateur en particulier pour véhicule automobile, comprenant :
- un bâti fixe ;
- au moins un ensemble porteur destiné à supporter un véhicule, et mobile par rapport au bâti, et
- un vérin à vis tel que mentionné ci-dessus, interposé entre l'ensemble porteur et le bâti.

L'invention sera mieux comprise à l'étude de la description qui va suivre, donnée uniquement à tire d'exemple, et faite en se référant aux dessins annexés, sur lesquels :
- la figure 1 est une vue en perspective d'un pont élévateur comprenant deux colonnes ;
- la figure 2 est une vue en coupe transversale selon II-II d'une colonne du pont élévateur ;
- la figure 3 est une vue en coupe longitudinale d'un ensemble vis/écrou d'un vérin à vis logé dans la colonne, présentant une usure faible ;
- la figure 4 est une vue analogue à la figure 3 du système vis/écrou présentant une usure importante ;
- la figure 5 est une figure analogue à la figure 3 avec un système vis/écrou selon une variante, présentant une usure faible ;
- la figure 6 est une vue du système vis/écrou de la figure 5, présentant une usure importante.

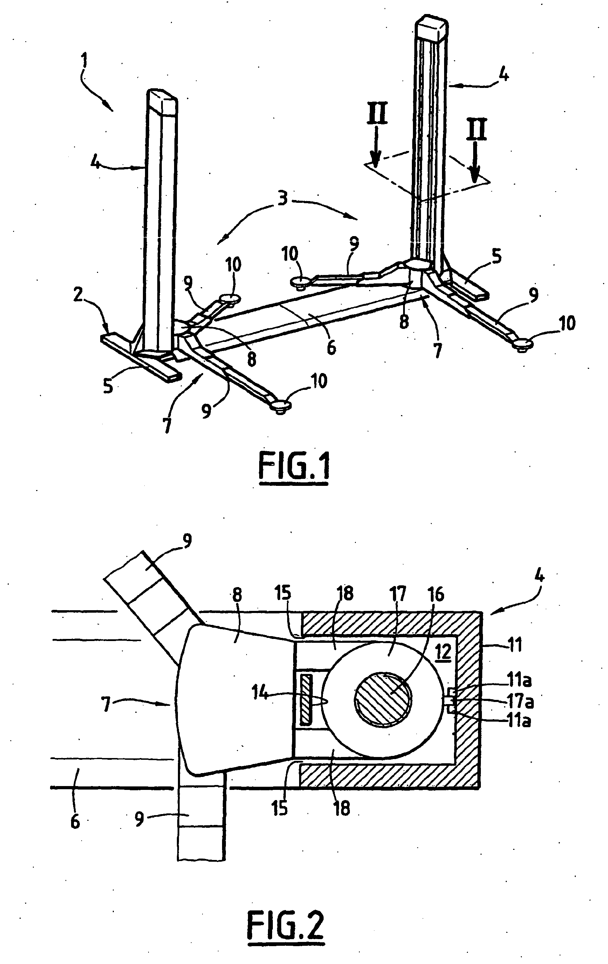

Comme représenté sur la figure 1, un pont élévateur 1 est prévu pour déplacer verticalement un véhicule automobile non représenté.

Le pont élévateur 1 comprend un bâti 2 fixé au sol, et un équipage mobile 3 déplaçable verticalement par rapport au bâti 2, de façon continue et réglable.

Des moyens d'entraînement sont disposés entre le bâti 2 et l'équipage mobile 3 pour commander le déplacement vertical et le maintien de l'équipage mobile 3 à la hauteur désirée.

Les moyens d'entraînement se présentent sous la forme de deux vérins à vis 4 disposés verticalement en étant espacés l'un de l'autre et situées de part et d'autre d'un espace de réception d'un véhicule. Les vérins à vis 4 forment deux colonnes verticales du pont élévateur 1.

Le bâti 2 comprend des pieds de fixation 5 par lesquels les vérins à vis 4 sont maintenus fixés verticalement sur le sol. Le bâti 2 comprend une traverse 6 s'étendant transversalement entre les pieds 5.

L'équipage mobile 3 comprend deux ensembles porteurs 7 identiques. Chaque ensemble porteur 7 est monté mobile verticalement sur un vérin à vis 4.

Seul un ensemble porteur 7 droit est décrit en détail. Cet ensemble porteur 7 comprend un chariot 8 portant deux bras télescopiques 9 s'étendant horizontalement à partir du chariot 8 dans l'espace de réception. Tel que représenté, les bras télescopiques 9 forment entre eux, dans un plan horizontal, un angle sensiblement égal à 120°. Des moyens de réglages de l'angle entre les bras télescopiques 9 peuvent être prévus pour permettre un réglage en fonction du véhicule à soulever.

Chaque bras télescopique 9 porte, à son extrémité opposée au chariot 8 sur lequel il est fixé, un patin d'appui 10. Les patins d'appui 10 sont disposés en fonctionnement sous des points d'appui préconisés de la caisse d'un véhicule. Les bras télescopiques 9 sont réglables en longueur.

Les vérins à vis 4 présentent des structures similaires. Seul le vérin à vis 4 droit est décrit en détail par la suite.

Comme représentée sur la figure 2, le vérin à vis 4 droit comprend un carter 11 délimitant un logement de réception 12. Le carter 11 présente sur un côté une ouverture latérale s'étendant longitudinalement suivant l'axe du vérin à vis 4 droit, sensiblement sur toute la longueur du carter 11. Le vérin à vis 4 droit comprend un cache 14 amovible fermant partiellement l'ouverture latérale en ménageant des passages transversaux 15 de chaque côté du cache 14, entre ce dernier et des bords du carter 11 délimitant l'ouverture latérale.

Le vérin à vis 4 comprend une vis 16 et un écrou 17. La vis 16 est disposée dans le logement 12 suivant l'axe du vérin à vis 4 droit, i.e. perpendiculairement au plan de la figure 2.

La vis 16 est immobilisée axialement et montée à rotation autour de son axe dans le carter 11. Pour ce faire, la vis 16 est par exemple fixée à ses extrémités axiales dans le carter 11 à l'aide de liaisons pivot non représentées.

L'écrou 17 est engagé sur la vis 16 pour se déplacer axialement le long de cette dernière. Des moyens de guidage sont prévus pour empêcher la rotation de l'écrou 17 par rapport au carter 11, en particulier lors de la rotation de la vis 16.

A cet effet, une paroi du carter 11 est muni de deux nervures 11a définissant entre elles une gorge s'étendant suivant l'axe du vérin à vis 4 droit, et l'écrou 17 est muni d'un ergot 17a venant coulisser dans ladite gorge.

Le chariot 8 de l'ensemble de support 7 se situe à l'extérieur du carter 11, du côté du cache 14. Le chariot 8 est fixé rigidement sur l'écrou 17 à l'aide de deux brides 18 s'étendant à travers les passages transversaux 15.

Le déplacement de l'écrou 17 le long de la vis 16 est commandé en entraînant en rotation la vis 16 selon son axe. Le déplacement de l'écrou 17 provoque le déplacement de l'ensemble porteur 7 associé.

Le vérin à vis 4 est de préférence du type irréversible. En d'autres termes, l'application d'un effort axial sur l'écrou 17 ne provoque aucun déplacement de l'écrou 17 axialement le long de la vis 16.

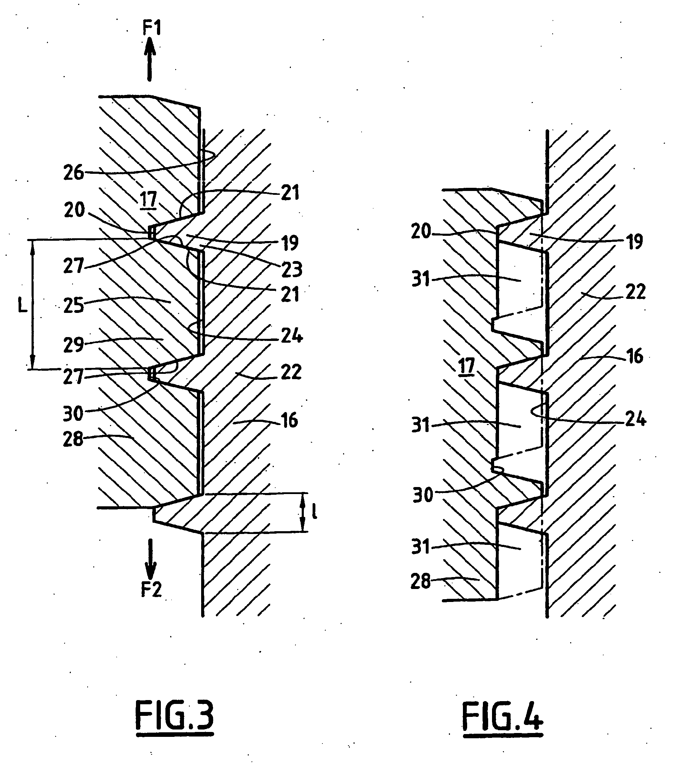

Comme on peut le voir sur la figure 3, la vis 16 est munie sur sa surface extérieure d'un filetage. L'écrou 17 est muni d'un taraudage complémentaire dudit filetage.

A l'état neuf, le filetage de la vis présente un filet 19 à section à profil trapézoïdal circulant en hélice sur la surface extérieure de la vis 16. Le filet 19 présente un sommet de filet 20, une base 23, et des flancs de filet 21 opposés supérieur et inférieur s'étendant entre le sommet 20 et la base 23. Le filet 19 rejoint le corps 22 de la vis 16 par sa base 23. Un fond de filet 24 unit les flancs 21 de deux tours voisins du filet.

Le taraudage de l'écrou 17 comprend de façon similaire un filet 25 prévu sur le corps annulaire 28 de l'écrou, le filet 25 présentant un sommet de filet 26, une base 29, et des flancs de filet 27 opposés supérieur et inférieur, et un fond de filet 30.

Le filet 25 de l'écrou 17 est de façon générale plus large que le filet 19 de la vis 16. La « largeur » est ici entendue comme la dimension d'un filet 19, 25 suivant une direction parallèle à l'axe de la vis 16.

Il en résulte que la section du filet 25 de l'écrou 17 présente une aire supérieure à l'aire de la section du filet 19 de la vis 16.

En observant les bases 23, 29 des filets 19, 25, la base 23 du filet 19 de la vis 16 présente une largeur I inférieure à la largeur L de la base 29 du filet 25 de l'écrou 17. La largeur de la base 23, 29 d'un filet 19, 25 s'entend ici comme la largeur du filet 19, 25 à la hauteur du sommet de l'autre filet 25, 19. En observant les filets 19, 25 à mi-hauteur, i.e. à mi-distance entre leurs sommets 20, 26 et leur fonds 24, 30, le filet 19 de la vis 16 présente une largeur inférieure à celle du filet 25 de l'écrou 17.

La caractéristique selon laquelle l'aire de la section du filet 25 de l'écrou 17 est supérieure à l'aire de la section du filet 19 de la vis 16 signifie que la différence entre ces aires est plus importante qu'une très faible différence qui ne serait due qu'aux tolérances de fabrication de l'écrou 17 et de la vis 16 rencontrées usuellement dans le domaine des vérins à vis. Il en est de même pour la différence entre les largeurs moyennes des filets 19, 25 ou la différence entre les largeurs de leurs bases 23, 29 ou leur largeur à mi-hauteur.

Le rapport de l'aire de la section du filet 25 de l'écrou 17 sur l'aire de la section du filet 19 de la vis 16 est de préférence sensiblement supérieur à 1,1, notamment supérieur 1,2, et en particulier supérieur à 1,3.

Par exemple, un rapport de 1,5 permet une augmentation de la durée de vie de l'écrou très appréciable.

Le rapport de l'aire de la section du filet 25 de l'écrou 17 sur l'aire de la section du filet 19 de la vis 16 est de préférence sensiblement inférieur à 3, notamment inférieur à 2,5, et en particulier inférieur à 2.

En observant le filetage de la vis 16, ce dernier présente un fond de filet 24 large, i.e. plus large que la base 23 du filet 24 de la vis 16. En observant le taraudage de l'écrou 17, ce dernier présente un fond de filet 29 étroit, i.e. moins large que la base 29 du filet 25 de l'écrou 17.

Les filets 19, 25 présentent les caractéristiques mentionnées ci-dessus à l'état neuf ou dans un état d'usure partielle. L'usure de la vis 16 et de l'écrou 17 modifie sensiblement ces caractéristiques, en particulier à un stade d'usure avancée.

En fonctionnement, l'écrou 17 se déplace par rapport à la vis 16 vers le haut (flèche F1) ou vers le vers bas (flèche F2), en étant sollicité vers le bas (flèche F2) par le poids de l'ensemble porteur 7 (figure 1) correspondant, seul ou ajouté d'au moins une partie du poids d'un véhicule supporté par l'ensemble porteur 7.

L'écrou 17 vient par conséquent en contact par l'intermédiaire du flanc 27 inférieur de son filet 25 sur le flanc supérieur 21 du filet 19 de la vis 16. Lors des mouvements de l'écrou 17 par rapport à la vis 16, ces flancs 27 et 21 s'usent mutuellement l'un contre l'autre.

Le filet 19 de la vis 16 est réalisé dans un matériau dur, du type acier écroui, plus résistant que le matériau constituant le filet 25 de l'écrou 17, constitué par exemple de bronze ou d'une matière plastique telle que le polyamide. Par conséquent, le filet 25 de l'écrou 17 s'use beaucoup plus rapidement que le filet 19 de la vis 16.

Progressivement, le filet 25 de l'écrou 17 est rogné de sorte que sa largeur diminue, en particulier la largeur de sa base 29. Toutefois, compte tenu de la largeur initiale importante du filet 25 de l'écrou 17 relativement au filet 19 de la vis 16, l'écrou 17 peut être utilisé pendant une durée prolongée permettant ainsi d'espacer des opérations de maintenance visant à contrôler l'écrou 17 et éventuellement à le remplacer.

Lorsque l'usure de l'écrou 17 est très avancée, on aboutit à la configuration de la figure 4 dans laquelle l'aire de la section 29 du filet 25 de l'écrou 17 est sensiblement égale à l'aire de la section du filet 19 de la vis 16.

La partie rognée du filet 25 de l'écrou 17 correspond aux zones 31 délimitées sur la figure 4 par des pointillés.

Cette usure constitue sensiblement l'usure maximale. En cas d'usure supplémentaire, la résistance du filet 25 de l'écrou 17 risquerait d'être insuffisante.

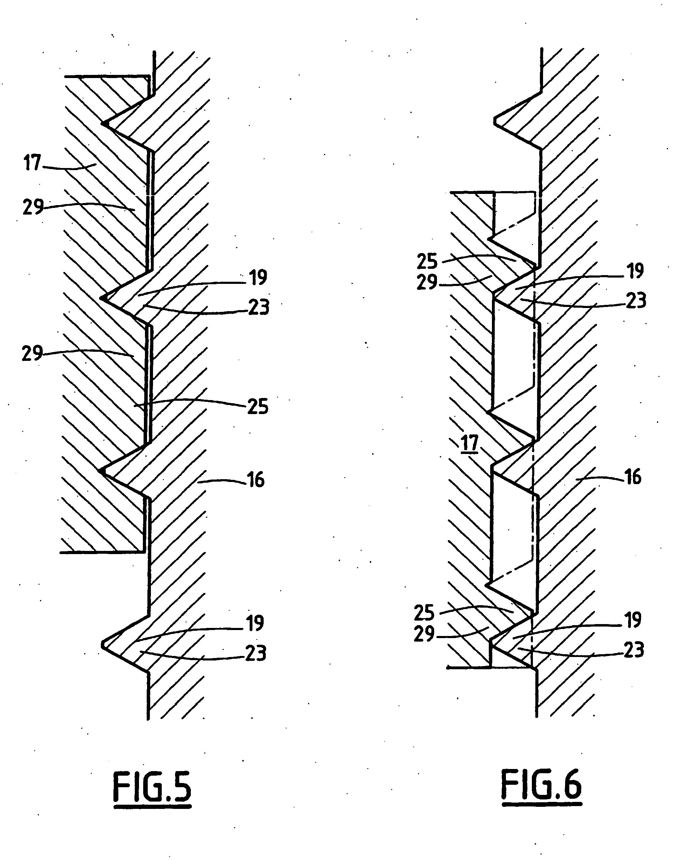

La section du filet 19 de la vis 16 n'est pas nécessairement à profil trapézoïdal. Dans la variante illustrée sur les figures 5 et 6, la section du filet 19 de la vis 16 présente un profil sensiblement en triangle, avec un sommet très étroit relativement à la base.

Les figures 2 à 5 illustrent des vis à un filet. La vis peut en variante présenter plusieurs filets, par exemple deux filets. Dans ce cas, le fond de filet unit les flancs de deux filets voisins.

Dans une variante inversée, la vis peut présenter un filet plus large que le filet de l'écrou, avec en particulier une base du filet de la vis plus large qu'une base du filet de l'écrou. Une telle variante est adaptée au cas où il serait plus avantageux de prévoir une vis s'usant plus rapidement que l'écrou.

En revenant à la figure 1, les vis 16 des vérins à vis 4 sont entraînées en rotation à l'aide de moyens d'entraînement non représentés.

Dans une première variante, les vérins à vis 4 sont chacun munis d'un moteur. La synchronisation des mouvements verticaux des ensembles porteurs 7 est dans ce cas réalisée par des moyens de renvoi mécanique logé dans la traverse 6, ou par des moyens de synchronisations électrique ou électronique.

Dans une deuxième variante, le pont élévateur 1 comprend un unique moteur disposé dans un des vérins à vis 4, des moyens de renvoi mécanique, logés par exemple la traverse 6 permettant d'entraîner simultanément les deux ensembles porteurs 7.

L'invention s'applique à d'autres ponts élévateurs que les ponts élévateurs pour véhicule automobile.

## Revendications

1. Pont élévateur pour véhicule automobile, comprenant :
- un bâti (2) fixe ;
- au moins un ensemble porteur (7) destiné à supporter un véhicule, et mobile par rapport au bâti (2), et
- un vérin à vis interposé entre l'ensemble porteur (7) et le bâti (2), le vérin à vis comprenant :
- un carter (11).
- une vis (16), et
- un écrou (17) engagé sur la vis (16), l'un de l'écrou (17) et de la vis (16) étant solidarisé axialement au carter (11) et l'autre en rotation, de façon que la rotation de l'un entraîne le déplacement axialement de l'autre, un premier filet (25) étant prévu sur l'un de l'écrou et de la vis (16), et un deuxième filet (19) étant prévu sur l'autre, les premier et deuxième filets (19, 25) venant en fonctionnement en appui l'un sur l'autre par leurs flancs (21, 27) en regard,
**caractérisé en ce que** la section du premier filet (25) présente une aire supérieure à l'aire de la section du deuxième filet (19).

2. Pont élévateur selon la revendication 1, **caractérisé en ce que** la base (29) du premier filet (25) est plus large que la base (23) du deuxième filet (19).

3. Pont élévateur selon la revendication 1 ou 2, **caractérisé en ce que** le rapport de l'aire de la section du premier filet (25) sur l'aire de la section du deuxième filet (19) est sensiblement supérieur à 1,1, notamment supérieur 1,2, et en particulier supérieur à 1,3.

4. Pont élévateur selon l'une quelconque des revendications précédentes, **caractérisé en ce que** le rapport de l'aire de la section du premier filet (25) sur l'aire de la section du premier filet (19) est sensiblement inférieur à 3, notamment inférieur à 2,5, et en particulier inférieur à 2.

5. Pont élévateur selon l'une quelconque des revendications précédentes, **caractérisé en ce que** le filet (19) présentant une section d'aire inférieure est le filet (19) de la vis (16).

6. Pont élévateur selon l'une quelconque des revendications précédentes, **caractérisé en ce que** le premier filet (25) est moins dur que le deuxième filet (19).

7. Pont élévateur selon l'une quelconque des revendications précédentes, **caractérisé en ce que** le deuxième filet (19) est en acier, notamment en acier écroui.

8. Pont élévateur selon l'une quelconque des revendications précédentes, **caractérisé en ce que** le premier filet (25) est en bronze.

9. Pont élévateur selon l'une quelconque des revendications 1 à 7, **caractérisé en ce que** le premier filet (25) est en matière plastique, notamment en polyamide.

## Claims

1. Lifting platform for a motor vehicle, comprising:
- a fixed frame (2);
- at least one load-bearing assembly (7) intended to support a vehicle, and movable in relation to the frame (2), and
- a screw jack unit interposed between the load-bearing assembly (7) and the frame (2), the screw jack unit comprising:
- a casing (11),
- a screw (16), and
- a nut (17) engaged on the screw (16), one of the nut (17) and the screw (16) being of one piece axially in relation to the casing (11) and the other being in rotation, in such a way that the rotation of the one incurs the axial displacement of the other, a first thread (25) being provided on one of the nut and screw (16), and a second thread (19) being provided on the other, the first and second threads (19, 25) coming into operation with one being in support of the other by their opposing flanks (21, 27), **characterised in that** the cross-section of the first thread (25) has a surface area greater than the surface area of the cross-section of the second thread (19).

2. Lifting platform according to Claim 1, **characterised in that** the base (29) of the first thread (25) is broader than the base (23) of the second thread (19).

3. Lifting platform according to Claim 1 or 2, **characterised in that** the ratio of the area of the cross-section of the first thread (25) to the area of the cross-section of the second thread (19) is appreciably greater than 1:1, in particular greater than 1:2 and especially greater than 1:3.

4. Lifting platform according to any one of the preceding claims, **characterised in that** the ratio of the area of the cross-section of the first thread (25) to the area of the cross-section of the first thread (19) is appreciably less than 3, in particular less than 2.5 and especially less than 2.

5. Lifting platform according to any one of the preceding claims, **characterised in that** the thread (19) having a cross-section with a lower surface area is the thread (19) of the screw (16).

6. Lifting platform according to any one of the preceding claims, **characterised in that** the first thread (25) is less hard than the second thread (19).

7. Lifting platform according to any one of the preceding claims, **characterised in that** the second thread (19) is made of steel, in particular of cold-hardened steel.

8. Lifting platform according to any one of the preceding claims, **characterised in that** the first thread (25) is made of bronze.

9. Lifting platform according to any one of Claims 1 to 7, **characterised in that** the first thread (25) is made of plastic material, in particular of polyamide.

## Patentansprüche

1. Kraftfahrzeug-Hebebühne, die umfasst:
- einen festen Rahmen (2);
- wenigstens eine Trägeranordnung (7), die dazu bestimmt ist, ein Fahrzeug zu unterstützen, und in Bezug auf den Rahmen (2) beweglich ist, und
- eine Hebespindel, die zwischen die Trägeranordnung (7) und den Rahmen (2) eingefügt ist, wobei die Hebespindel umfasst:
- ein Gehäuse (11),
- eine Spindel (16) und
- eine Mutter (17), die mit der Spindel (16) in Eingriff ist, wobei entweder die Mutter (17) oder die Spindel (16) an dem Gehäuse (11) axial und die jeweils andere rotatorisch befestigt sind, derart, dass die Drehung einer von ihnen die axiale Verlagerung der anderen zur Folge hat, wobei an der Mutter oder an der Spindel (16) ein erstes Gewinde (25) vorgesehen ist und an der jeweils anderen ein zweites Gewinde (19) vorgesehen ist, wobei sich das erste und das zweite Gewinde (19, 25) im Betrieb aneinander über ihre gegenüberliegenden Flanken (21, 27) abstützen,
**dadurch gekennzeichnet, dass** der Querschnitt des ersten Gewindes (25) eine Fläche aufweist, die größer ist als die Querschnittsfläche des zweiten Gewindes (19).

2. Hebebühne nach Anspruch 1, **dadurch gekennzeichnet, dass** die Basis (29) des ersten Gewindes (25) breiter als die Basis (23) des zweiten Gewindes (19) ist.

3. Hebebühne nach Anspruch 1 oder 2, **dadurch gekennzeichnet, dass** das Verhältnis der Querschnittsfläche des ersten Gewindes (25) zu der Querschnittsfläche des zweiten Gewindes (19) im Wesentlichen größer als 1,1, insbesondere größer als 1,2 und noch spezieller größer als 1,3 ist.

4. Hebebühne nach einem der vorhergehenden Ansprüche, **dadurch gekennzeichnet, dass** das Verhältnis der Querschnittsfläche des ersten Gewindes (25) zu der Querschnittsfläche des zweiten Gewindes (19) im Wesentlichen kleiner als 3, insbesondere kleiner als 2,5 und noch spezieller kleiner als 2 ist.

5. Hebebühne nach einem der vorhergehenden Ansprüche, **dadurch gekennzeichnet, dass** das Gewinde (19), das einen kleineren Querschnitt aufweist, das Gewinde (19) der Spindel (16) ist.

6. Hebebühne nach einem der vorhergehenden Ansprüche, **dadurch gekennzeichnet, dass** das erste Gewinde (25) weniger hart als das zweite Gewinde (19) ist.

7. Hebebühne nach einem der vorhergehenden Ansprüche, **dadurch gekennzeichnet, dass** das zweite Gewinde (19) aus Stahl, insbesondere aus kaltverfestigtem Stahl ist.

8. Hebebühne nach einem der vorhergehenden Ansprüche, **dadurch gekennzeichnet, dass** das erste Gewinde (25) aus Bronze ist.

9. Hebebühne nach einem der Ansprüche 1 bis 7, **dadurch gekennzeichnet, dass** das erste Gewinde (25) aus Kunststoff, insbesondere aus Polyamid ist.
